# EUROPEAN PATENT APPLICATION

(11) **EP 4 595 779 A1**
(43) Date of publication of application: **06.08.2025**
(21) Application number: 23798495.0
(22) Date of filing: 27.09.2023
(51) Int. Cl.: A23N 7/00, A23N 15/04

(54) **PINEAPPLE PEELING AND CUTTING MACHINE**

(30) Priority: 30.09.2022 ES 202230842
(71) Applicant: Zummo Innovaciones Mecánicas, S.A.U., 46113 Moncada (ES)
(72) Inventor: PÉREZ MORILLO, Javier, 46113 Moncada, Valencia (ES); YEVES MARCO, Emilio, 46113 Moncada, Valencia (ES); SIMÓN CASTILLO, Paula, 46113 Moncada, Valencia (ES)
(74) Representative: Clarke, Modet y Cía., S.L.
(86) International application number: PCT/ES2023/070576
(87) International publication number: WO 2024/069035

(57) **Abstract**

Pineapple peeling and cutting machine, with a crown and base cutting system (6), a peeling system (7) and a final processing and delivery mechanism (8). The crown and base cutting system (6) has gripping means (9) to hold and move the pineapples (1) during cutting and guide them to the peeling system (7), which in turn have a pneumatic gripper (11) with two arms (12) with parallel opening and a "V"-shaped claw (13) on each arm (12), both claws (13) facing each other to hold the pineapple (1) between them, and a pneumatic linear actuator (14) to move the pneumatic gripper (11), and a crown cutting blade (10) and a base cutting blade (10') of the pineapple (1), both horizontal and adjustable in height.

## Description

### Field of the invention

The present invention belongs to the technical field of the agri-food industry, and specifically to that of the machines for the treatment and processing of fruits in a natural manner. More specifically the invention relates to a pineapple peeling and cutting machine, which has a crown and base cutting system, a peeling system arranged downstream of the crown and base cutting system, and final processing and delivery means arranged downstream the peeling system.

### Background of the invention

Various machines for the treatment and processing of fruits in a natural manner, such as automatic fruit juicer machines, mainly for oranges, but also for other fruits, are known from the state of the art.

However, regarding the market of pineapple processing machines, there are no alternatives that perform automatically, maximizing the yield and maximizing the efficiency of peeling, cutting and slicing pineapples, delivering them to the user ready to be consumed directly.

It is therefore desirable to have a pineapple peeling and cutting machine that performs fully automatic peeling, slicing and cutting of pineapples, and is able to deliver them directly to the user in an efficient manner and ready-to-eat.

### Description of the invention

The present invention relates to a pineapple peeling and cutting machine, which has an access door to the interior of the machine, a feeder for conveying the pineapples to a crown and base cutting system, a peeling system arranged downstream of the crown and base cutting system, and finally a final processing and delivery mechanism arranged downstream the peeling system. Additionally, the machine has a control system, which by means of a set of sensors and control electronics controls the drive and movement of the crown and base cutting system, the peeling system and the final processing and delivery mechanism.

The design, configuration and positioning of the door favors the cleaning, maintenance and replacement of the different systems inside the machine.

The external structure of the machine will have the means of control and buttons for the handling of the different functions, with a simple interface that facilitates the interaction of the user with the machine, so that the user can obtain the peeling and slicing of the pineapple in a fast, intuitive and simple way.

In the present invention, the crown and base cutting system presents movable gripping means, for holding and moving the pineapples from the feeder, in a linear cutting path for cutting their crown and base, and driving them to the peeling system. These gripping means specifically consist of a pneumatic gripper having in turn two parallel opening arms and a "V" shaped claw attached to the end of each arm. Both claws are facing each other so that the pineapple can be held firmly and gently between them. This system provides a wide opening range, covering different caliber ranges, which allows the treatment of all types of pineapples. Further, the "V" shape and the designed support geometry of the claws allow a better grip on the pineapple, firmly but without excessive pressure, thus avoiding undesired juice extraction from the fruit. This implies a more secure grip during the cycle and with the force exerted more centered on the pineapple.

In addition to the pneumatic gripper, the gripping means have a pneumatic linear actuator on which said pneumatic gripper is fixed, so that it can be moved along the linear cutting path for cutting the crown and base.

In addition to the movable gripping means, the crown and base cutting system has a crown cutting blade and a base cutting blade of the pineapple, both horizontal blades, and arranged in the cutting path of the gripping means, both blades being adjustable in height to be able to treat different sizes of pineapples, and logically always separated from each other a distance to allow the pneumatic gripper to pass between both blades in its linear cutting path, and to be able to carry out said crown and base cutting by means of the linear cutting path of the gripping means passing between said horizontal blades. Since the blades have an adjustable height, total adaptation is achieved to all caliber ranges, thus optimizing performance to the maximum without wasting parts of the pineapple being treated.

Preferably, both the crown cutting blade and the base cutting blade are "V" shaped. By means of this type of blades, a progressive cut is achieved, avoiding tearing and fiber breakage, which improves the cutting result

According to a particular embodiment of the invention, the crown and base cutting system has a pneumatic ejector cylinder that can be moved perpendicularly to the linear cutting path of the movable gripping means and to the peeling system, so that in its movement it ejects the crown that is disposed on the crown cutting blade after the crown cutting has been performed. In this way, there is absolute control over the crown ejection time is desired. Through this ejection movement, hooking of the crown with other movable or fixed elements of the machine is avoided.

In particular, the pineapple feeder is made up a first guiding hole made in the internal part of the door and a second guiding hole made in the internal structure of the machine, so that both guiding holes face each other and form a guide or path to hold and guide the pineapples from the pineapple insertion point to a support base or plate of the crown and base cutting system, which is considered the cycle start position. This way of feeding is much simpler, avoids moving mechanisms that can cause jams, and is much more ergonomic for the user. Thus, through this feeder, the pineapple is manually introduced into the machine by the user through a feeding gate arranged in the door of the machine, towards the feeder.

According to different particular embodiments of the invention, the peeling system presents a cylindrical cutting tube arranged vertically, for vertically holding the pineapple which has been positioned therein by the movable gripping means, and cutting or peeling its outer skin, and slicing where appropriate the pineapple by means of pressure exerted by a vertical cylindrical pusher, which is arranged over the cylindrical cutting tube and the pineapple, and has a vertical movement pushing the pineapple along the cylindrical cutting tube. This cylindrical cutting tube houses the pineapple block inside, stripped of its outer skin once it has been cut or peeled by the pressure of the vertical cylindrical pusher.

Thus, once the pineapple is positioned on the peeling system, directly on the cylindrical cutting tube, the claws of the gripping means open and release the pineapple, and then the vertical cylindrical pusher presses the pineapple on the cylindrical cutting tube, thus removing all the outer contour or skin of the pineapple, and leaving inside a perfectly peeled block of pineapple ready for the next stage.

Preferably, the end of the cylindrical pusher copies the shape of the cylindrical cutting tube assembly in such a way that it may be introduced inside said cylindrical cutting tube during peeling of the outer skin, advancing the pineapple along said cylindrical cutting tube.

According to different particular embodiments, this peeling system can have different elements that improve globally the pineapple processing.

First, the peeling system may feature at least one inner tubular blade, which is arranged concentrically inner to the main cylindrical cutting tube, which performs the cutting and removal of the pineapple core where appropriate during the outer skin peeling movement. In addition to this inner tubular blade, the peeling system has at least one inner radial blade arranged radially inside the cylindrical cutting tube, in order to perform the radial cutting and slicing of the resulting pineapple block during the peeling or cutting of its outer skin, and for fixing the inner tubular blade to the cylindrical cutting tube.

Further, the peeling system may feature at least one outer radial blade, which is arranged radially on the outside of the cylindrical cutting tube, to perform radial cutting of the outer skin during its peeling, and facilitate its detachment and exit from the peeling system.

Preferably, the peeling system can also be provided with deflectors arranged on the outside of the bottom of the cylindrical cutting tube, which deflect the skin at the end of peeling, facilitating the exit of the skin from the peeling system.

According to a particular embodiment of the invention, the final processing and delivery mechanism is movable perpendicularly to the linear cutting path of the movable gripping means and to the peeling system in such a way that after peeling or cutting the outer skin, it will move the peeled and sliced pineapple block, if necessary, into a collection bucket ready-to-eat.

According to the above embodiment, and in particular, the final processing and delivery mechanism can be provided by a horizontal laminar blade with reciprocating horizontal movement, so that it cuts the pineapple block into slices and places them already cut into the collection bucket. Thus, as the slicing blade cuts slices from the bottom of the pineapple block by its reciprocating horizontal motion, the remaining pineapple block descends and the horizontal laminar blade continues to cut slices from it.

Alternatively, the final processing and delivery mechanism for the pineapples may have a first fixed block with vertically stacked horizontal laminar blades spaced apart, the free ends of which form a cutting edge, or leading edge, and a second horizontally movable block with slots spaced apart and aligned with the horizontal laminar blades of the first block. Through this configuration, the pineapple block is after passing through the peeling system arranged between the first block and the second block of the final processing and delivery mechanism, and the second block pushes the pineapple block against the first block, the horizontal laminar blades of the first block being introduced into the slots of the second block, and the cutting edge performing the slicing of said pineapple block.

### Brief description of the drawings

Next, in order to facilitate the understanding of the invention, by way of illustration, but not limitation, an embodiment of the invention will be described with reference to a series of figures.

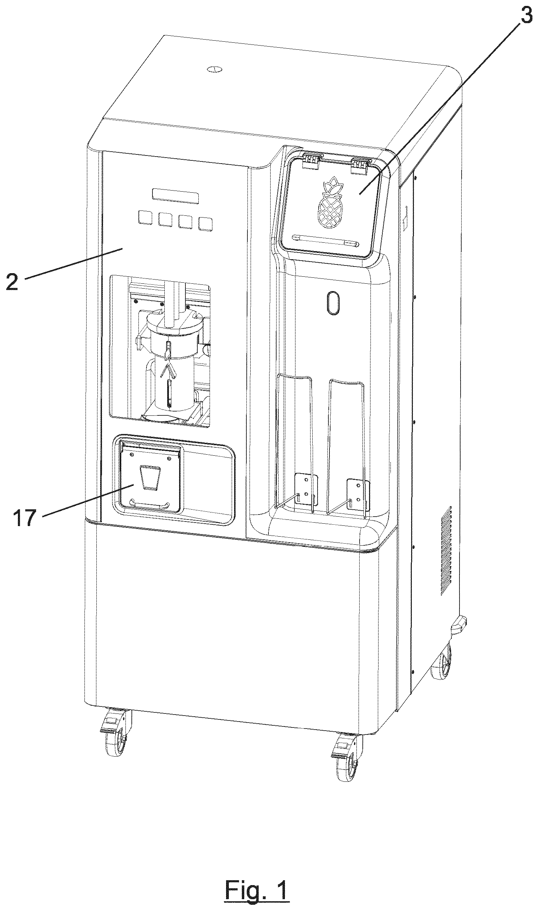

Figure 1 is an external perspective view of an embodiment of the machine subject of the present invention with the door closed.
Figure 2 is an external perspective view of the machine of Figure 1 with the door open to display its main elements.
Figure 3 is a partial detail perspective view of the machine of Figures 1-2 showing in detail some of its elements.
Figure 4 is a perspective view of an embodiment of the crown and base cutting system of the machine subject of the invention, including a pineapple to be processed.
Figure 5 shows an embodiment of the gripping means of the crown and base cutting system of Figure 4.
Figure 6 shows in detail an embodiment of the pneumatic gripper of the gripping means of Figure 5.
Figure 7 depicts the linear cutting path from the gripping means to the peeling system of an embodiment of the pineapple peeling and cutting machine.
Figure 8 shows a particular embodiment of a "V" shaped crown cutting blade.
Figure 9 shows the cutting blade of Figure 9 arranged in an embodiment of the pineapple peeling and cutting machine, adjustable in shape, showing the existing space for the positioning of the crown once cut, and a pneumatic ejector cylinder of said crown.
Figure 10 shows a particular embodiment of the peeling system with four inner tubular blades and four outer radial blades, together with the deflectors.
Figures 11a, 11b and 11c show as an example three plan sketches of the cuts produced in the pineapple block by a peeling system with one, four and six inner tubular blades respectively.
Figure 12 shows an embodiment of the cylindrical pusher end, which copies the shape of the cylindrical cutting tube assembly embodiment.
Figure 13 shows an embodiment of a final processing and delivery mechanism with a horizontal laminar blade.

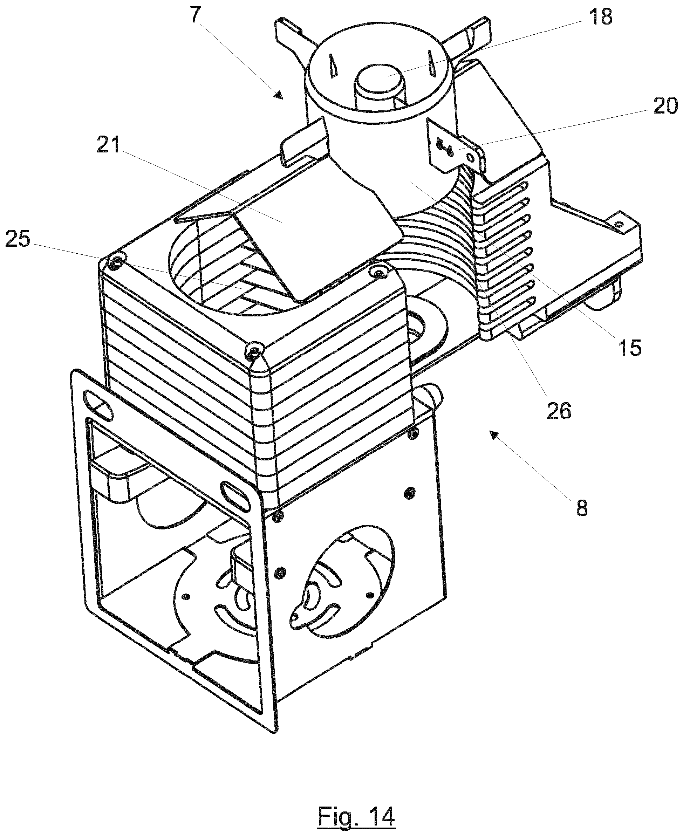

Figure 14 shows a perspective of an alternative embodiment of the final processing and delivery mechanism with horizontal laminar blade blocks and slots, arranged downstream the peeling system.

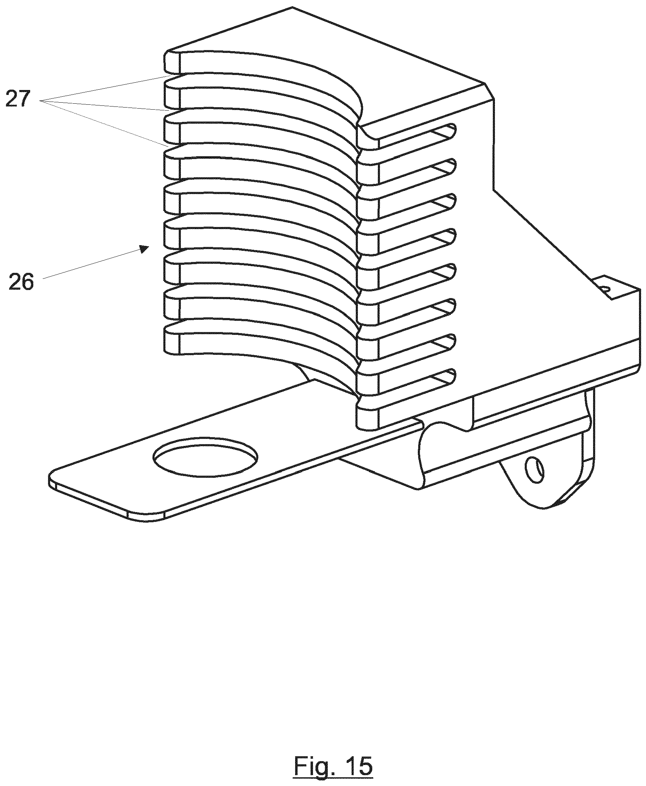

Figure 15 is a side perspective view of a slotted block embodiment of the final processing and delivery mechanism of Figure 14.

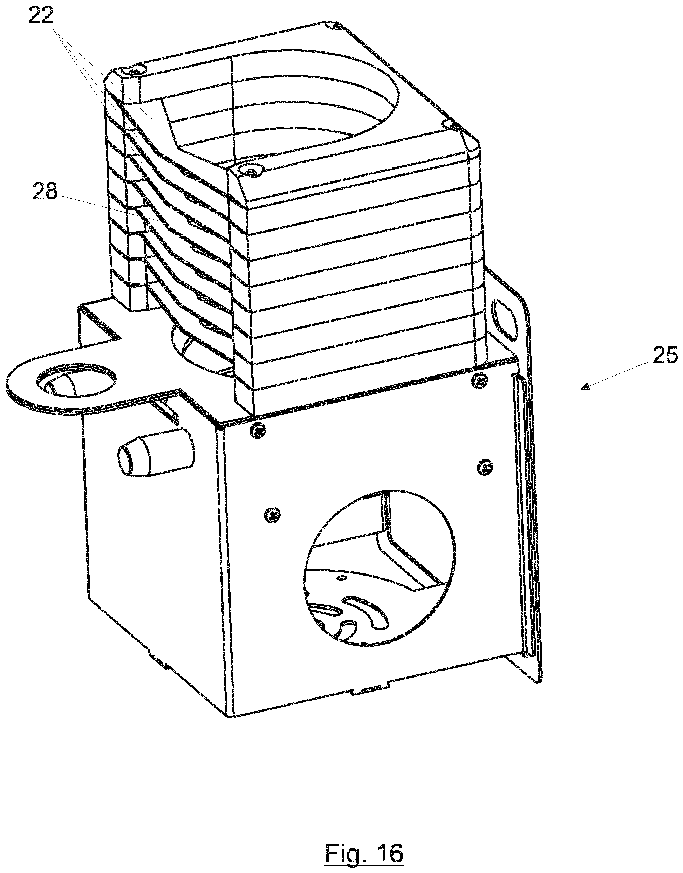

Figure 16 is a perspective view of an embodiment of a blade block of the final processing and delivery mechanism of Figure 14, with the cutting edge inclined with respect to the vertical with the top advanced.

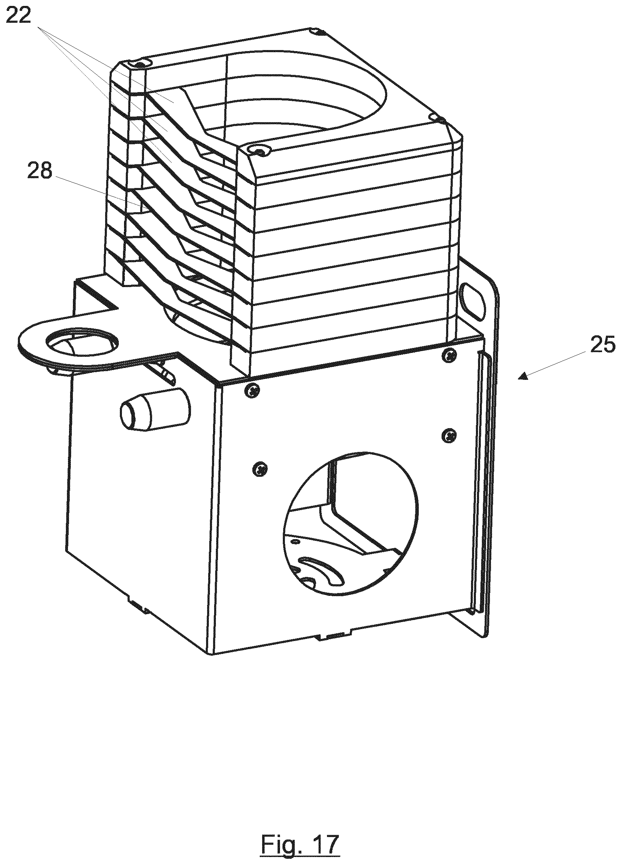

Figure 17 is a perspective view of a realization of a blade block alternative to that of Figure 16, in this case with the cutting edge inclined with respect to the vertical with the bottom advanced.

In these figures, reference is made to a set of elements that are:
- 1.: pineapple
- 2.: machine door
- 3.: pineapple feeding gate
- 4.: first guide hole on the inner part of the machine door
- 5.: second guiding hole in the internal structure of the machine
- 6.: pineapple crown and base cutting system
- 7.: pineapple peeling system
- 8.: pineapple final processing and delivery mechanism
- 9.: pineapple gripping means
- 10.: crown cutting blade
- 10': base cutting blade
- 11.: pneumatic gripper of gripping means
- 12.: pneumatic gripper arms
- 13.: pneumatic gripper jaws
- 14.: pneumatic linear actuator of gripping means
- 15.: cylindrical cutting tube of the peeling system
- 16.: cylindrical pusher of the peeling system
- 17.: outlet channel of the pineapple block
- 18.: inner tubular blade of the peeling system
- 19.: outer radial blade of the peeling system
- 20.: inner radial blade of the peeling system
- 21.: deflectors of the peeling system
- 22.: horizontal laminar blade
- 23.: support base for the pineapple of the crown and base cutting system
- 24.: pneumatic ejector cylinder
- 25.: first block of the pineapple final processing and delivery mechanism
- 26.: second block of the pineapple final processing and delivery mechanism
- 27.: slots of the second block of the pineapple final processing and delivery mechanism
- 28.: leading edge formed by the ends of the horizontal laminar blades of the first block

### Detailed description of the invention

The object of the present invention is a pineapple peeling and cutting machine.

As can be seen in the different figures, the machine has a door (2) for access to its interior, a feeder to convey the pineapples (1) from a feeding gate (3) arranged in the door (2), to a crown and base cutting system (6), a peeling system (7) arranged downstream of the crown and base cutting system (6), and finally a final processing and delivery mechanism (8) arranged downstream the peeling system (7), which will deliver the duly processed pineapple block (1) to a collection bucket to be placed in an outlet channel (17) arranged in the door (2) of the machine. Additionally, the machine has a control system, which by means of a set of sensors and control electronics controls the drive and movement of the crown and base cutting system (6), the peeling system (7) and the final processing and delivery mechanism (8).

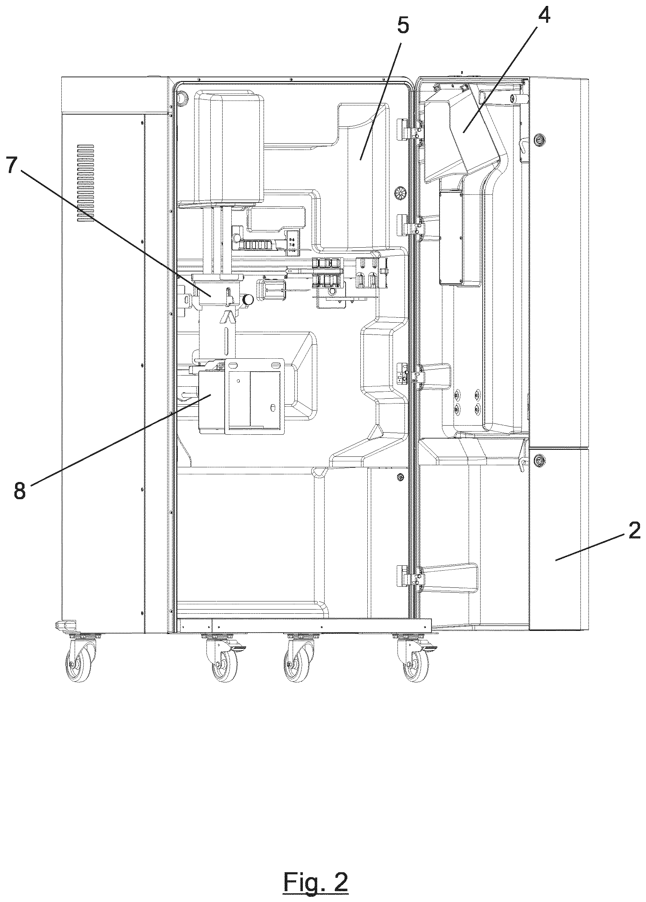

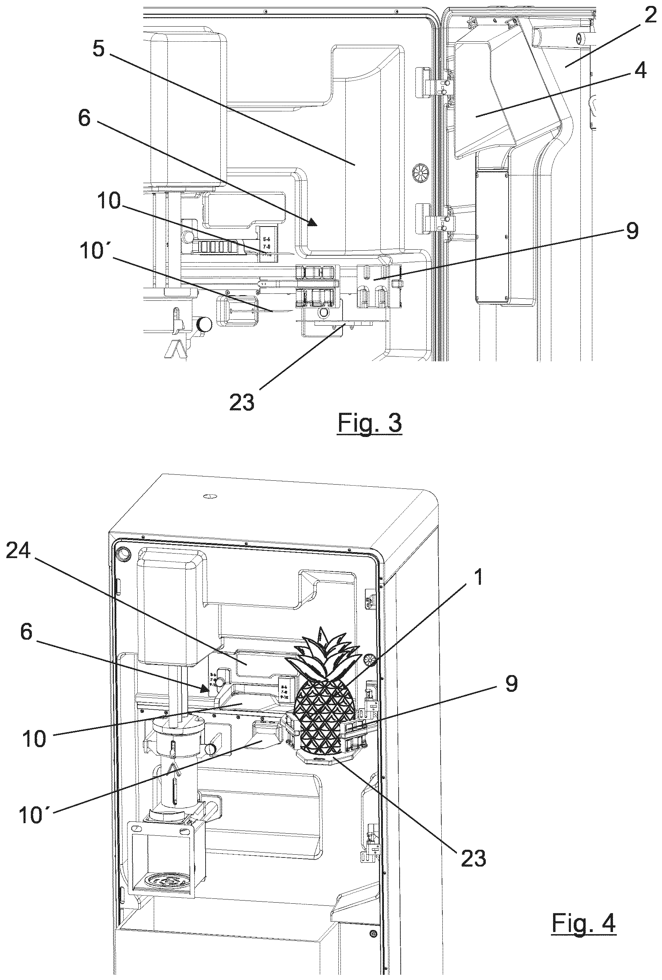

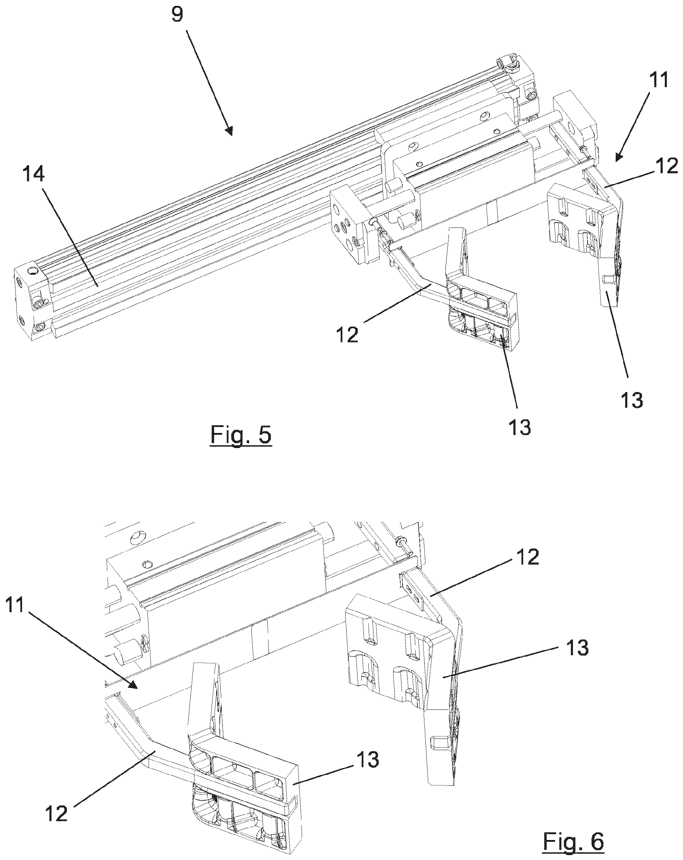

As seen in Figure 2, and in more detail in Figures 3-9, the crown and base cutting system (6) has movable gripping means (9), for gripping and moving the pineapples (1) from the feeder, along a linear cutting path for cutting their crown and base, and driving them to the peeling system (7). These gripping means (9) consist of a pneumatic gripper (11), which in turn has two parallel opening arms (12), as shown in Figures 5 and 6, and a "V" shaped claw (13) attached to the end of each arm (12). Both claws (13) are facing each other in order to hold the pineapple (1) between them firmly and smoothly. The specific geometry of the "V"-shaped jaws distributes the pressure exerted on the pineapple (1) more evenly and holds the pineapple (1) firmly, but without exerting overpressure that would cause a loss of juice and therefore a loss of yield in the machine processing.

Additionally, the gripping means (9) feature a pneumatic linear actuator (14) on which the pneumatic gripper (11) is fixed so that it can be moved along the linear cutting path for cutting the crown and the base of the pineapple (1).

In addition to these movable gripping means (9), the crown and base cutting system (6) presents a crown cutting blade (10) and a base cutting blade (10') of the pineapple (1), both blades (10, 10') horizontal, and arranged in the cutting path of the gripping means (9), both blades (10, 10') being adjustable in height in order to be able to treat different sizes of pineapples (1). In particular both blades (10, 10') can be adjustable in height, although according to a particular simpler realization in execution the base cutting blade (10') will remain fixed while the distance will be regulated by the height adjustment of the crown cutting blade (10). Both blades (10, 10') are logically always separated from each other a distance such as to allow the passage of the pneumatic gripper (11) between both blades (10, 10') in its linear cutting path, so that they can carry out said cutting of crown and base by means of the linear cutting path of the gripping means (9) passing the pneumatic gripper (11) with the pineapple (1) between said horizontal blades (10, 10').

Alternatively the base cutting blade (10') may be fixed on the machine, while the only one that is adjustable in height is the crown cutting blade (10), by means of a set of positioners and knobs, in a conventional manner. This also allows the processing of all pineapple sizes with a single set of moving elements.

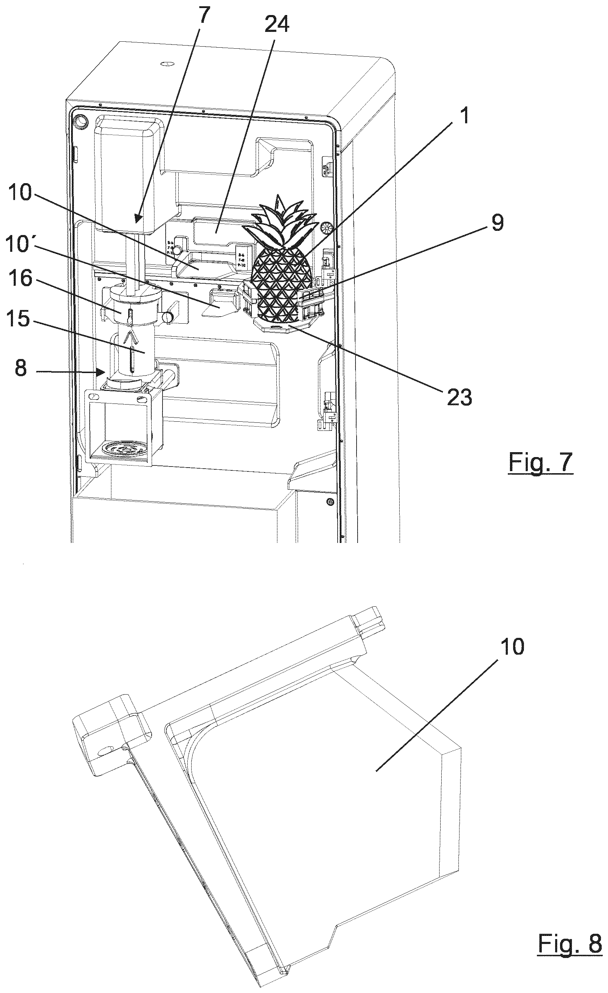

Preferably, as can be seen in Figure 8, both the crown cutting blade (10) and the base cutting blade (10') are "V" shaped.

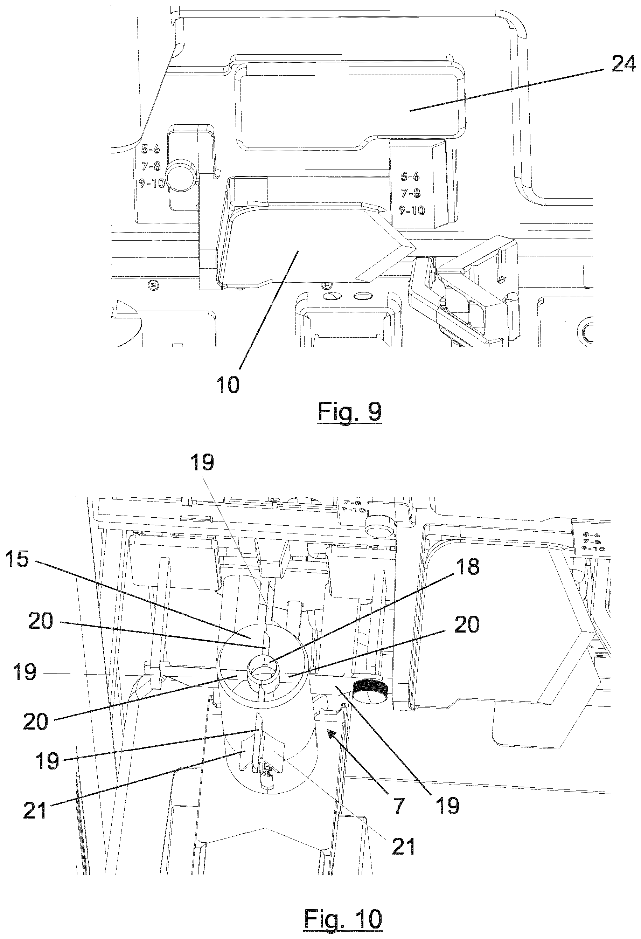

According to a particular embodiment of the invention shown in Figure 9, the crown and base cutting system (6) has an ejector pneumatic cylinder (24) which moves in use perpendicularly to the linear cutting path of the movable gripping means (9) and to the peeling system (7), so that in its movement it ejects the crown which has remained arranged on the crown cutting blade (10) towards the waste bucket of the machine after said cutting of said crown has been carried out. In this case, and due to this additional function, the crown cutting blade (10) will have a larger surface area than the base cutting blade (10') of the pineapple (1).

In particular, the pineapple feeder is formed by a first guiding hole (4) made in the internal part or internal fairing of the door (2) and by a second guiding hole (5) made in the internal structure or internal fairing of the machine, in such a way that both guiding holes (4, 5) face each other and form a guide or path for holding and guiding the pineapples (1) from the point of introduction of the sprocket (1) to a support base (23) or plate of the crown and base cutting system (6), where the pineapple (1) is arranged to be gripped by the gripping means (9). Figure 3 shows in detail these guiding holes (4, 5) arranged respectively on the inside of the door (2) and on the internal structure of the machine. This way of feeding is simple, avoids moving mechanisms that can cause jams, and is much more ergonomic for the user. Thus, by means of this feeder, the pineapple (1) is manually introduced into the machine by the user through a feeding gate (3) arranged in the door (2) of the machine, towards the feeder.

According to different particular embodiments of the invention shown in the figures, the peeling system (7) has a cylindrical cutting tube (15) arranged vertically, for holding vertically the pineapple (1) which has been positioned therein by the movable gripping means (9) and which has been stripped of its crown and base, and cutting or peeling its outer skin by means of pressure exerted by a vertical cylindrical pusher (16), which is arranged on the cylindrical cutting tube (15) and the pineapple (1), and has a vertical movement pushing the pineapple (1) along the cylindrical cutting tube (15). This cylindrical cutting tube (15) houses inside it the pineapple block (1) stripped of its outer skin once it has been cut or peeled by means of the pressure of the vertical cylindrical pusher (16).

According to a preferred embodiment of the invention, the control system for actuation and movement allows the peeling system (7) to repeat the movements for peeling the skin as many times as necessary until peeling is achieved, by means of the sensors and the control electronics. That is to say, if the pineapple (1) is very hard and at the first attempt the cylindrical cutting tube (15) is not able to cut or peel its skin, said cylindrical cutting tube (15) would perform the movement again a certain number of times until either peeling is achieved or give a failure. This is achieved in particular by means of a pair of magnetic sensors or detectors that are arranged in the cylindrical cutting tube (15) and function as a hall sensor to determine its position by measuring the magnetic field.

Preferably, the cylindrical pusher (16) will be provided with a positioning pivot to facilitate mounting on a vertical cylinder of the machine. It will also have an anti-rotation system to prevent it from turning during the cutting of the outer skin of the pineapple (1).

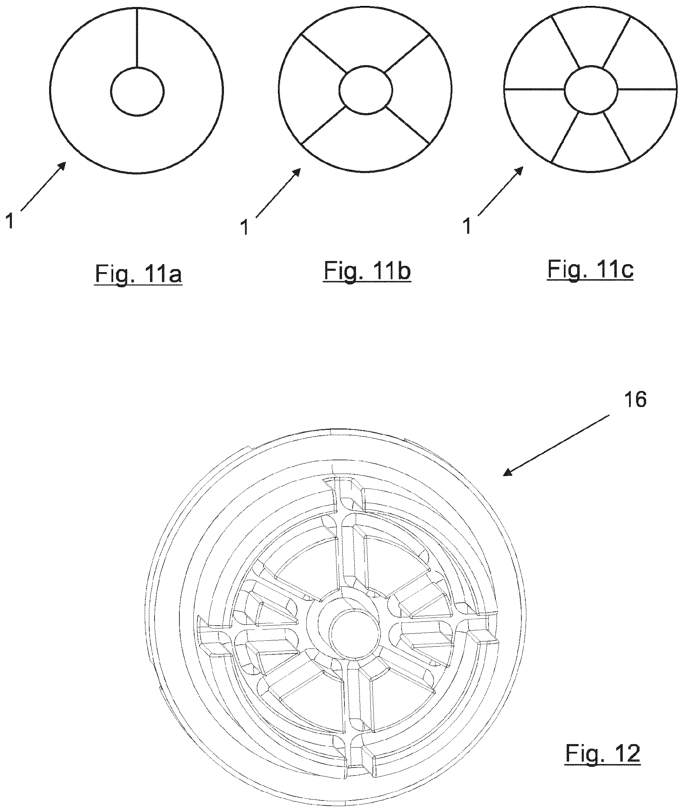

Preferably, as can be seen in Figure 12, the end of the cylindrical pusher (16) copies the shape of the cylindrical cutting tube assembly (15), so that it can be introduced inside said cylindrical cutting tube (15) during the peeling of the outer skin, making the pineapple (1) advance along said cylindrical cutting tube (15).

According to different particular embodiments, this peeling system (7) can have different elements that improve globally the processing of the pineapple (1).

First, the peeling system (7) may feature at least one inner tubular blade (18), which is arranged concentrically into the main cylindrical cutting tube (15). In this way, the inner tubular blade (18) performs the cutting and removal of the core from the pineapple block (1) during the peeling movement of the outer skin. The core falls through the inside of the inner tubular blade (18) into a waste bucket of the machine. Figure 10 shows this inner tubular blade (18). In addition to this inner tubular blade (18), the peeling system (7) presents at least one inner radial blade (20) arranged radially inside the cylindrical cutting tube (15), for performing the radial cutting and chopping of the resulting pineapple block (1) during the peeling or cutting of its outer skin into a number of pieces corresponding to the number of inner radial blades (20), and for fixing the inner tubular blade (18) to the cylindrical cutting tube (15). Figure 10 shows the case in which four inner radial blades (20) are arranged, so that in this case the pineapple block (1) would be shopped into four pieces. Alternatively, a different number of inner radial blades (20) can be used, which will determine the number of pieces in which the pineapple block (1) is. Figures 11a-11c show schematically three plan sketches of the result of the slicing produced on the pineapple block (1) by means of a peeling system (7) with one inner radial blade (20) that chops the pineapple block (1) into two pieces (Figure 11a), with four inner radial blades (20) that chops the pineapple block (1) into four pieces (Figure 11b), and with six inner tubular blades (20) that chops the pineapple block (1) into six pieces (Figure 11c).

In addition, the peeling system (7) may be provided with at least one outer radial blade (19), which is arranged radially on the outside of the cylindrical cutting tube (15), to perform the radial cutting of the outer skin during its peeling, and facilitate its detachment and exit from the peeling system (7). Figure 10 shows an embodiment in which the peeling system has four outer radial blades (19) of the peeling system (7), although alternatively there may be other embodiments with different number of outer radial blades (19), which is what will condition the number of pieces into which the outer skin is split during peeling.

Preferably, as shown also in the embodiment of Figure 10, in addition the peeling system (7) may be provided with deflectors (21) arranged on the outside of the bottom of the cylindrical cutting tube (15), which deflect the skin at the end of its peeling, facilitating the exit of the skin from the peeling system (7) into the waste bucket of the machine.

According to a particular embodiment of the invention, the final processing and delivery mechanism (8) is movable perpendicularly to the linear cutting path of the movable gripping means and to the peeling system in such a way that after peeling or cutting the outer skin, it will move the peeled and sliced pineapple block, if necessary, into a collection bucket ready-to-eat.

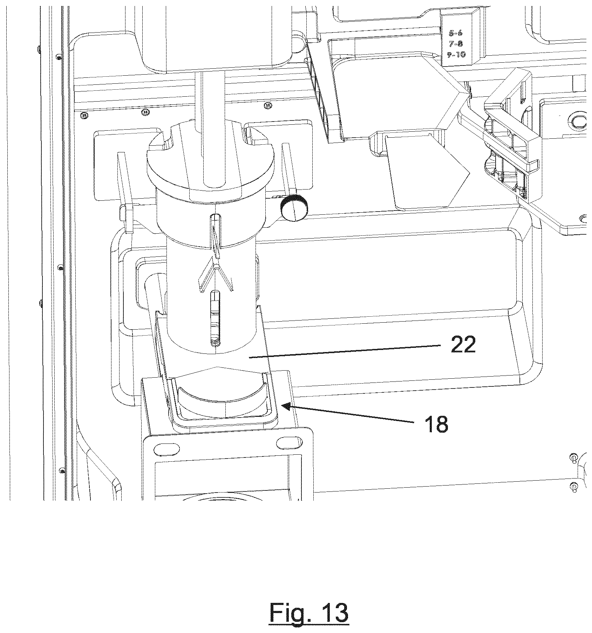

According to the above embodiment, and in particular, the final processing and delivery mechanism (8) may be provided with a horizontal laminar blade (22), as shown in Figure 13. According to this realization, the horizontal laminar blade (22) of the final processing and delivery mechanism (8) has an alternating horizontal movement, or "back and forth", or "forward and reverse", so that it cuts the pineapple block (1) into slices and places them already cut in the collection bucket ready to be delivered to user. In this way, as the horizontal laminar blade (22) cuts slices from the bottom of the pineapple block (1) according to its reciprocating horizontal motion, said pineapple block (1) descends, and the horizontal laminar blade (22) continues to cut slices from the pineapple block (1). The number of alternate horizontal movements or repetitions of the horizontal laminar blade (22) will be the number of horizontal cuts or slices made in the pineapple block (1). Thus, in the onward or forward movement, the horizontal laminar blade (22) will cut the slice, and in the return or reverse movement, it will deliver the slice into the collection bucket. The advantage of cutting slices one at a time with reciprocating horizontal movement is that there is less damage to the fiber and therefore less extraction of the pineapple juice (1) during the cutting of the slices. In this way, by cutting the slices one at a time, a cleaner cut is made, in which less pineapple block (1) is squeezed and crushed, so the fiber is better treated and less juice is removed.

Preferably, this horizontal laminar blade (22) will have a "V" shape, which improves the cutting of the slices, providing greater parallelism in the cuts of said slices.

According to an alternative embodiment to the above, the pineapple final processing and delivery mechanism (8) may have a first fixed block (25) having a plurality of vertically stacked and spaced apart horizontal laminar blades (22), whose free ends form a cutting edge (28), and a second horizontally movable block (26) having slots (27) spaced apart and aligned, or in correspondence with the horizontal laminar blades (22) of the first block (5). According to this arrangement, the pineapple block (1) is, upon passing through the peeling system (7), between the first block (25) and the second block (26) of the final processing and delivery mechanism (8), and the second block (26) pushes the pineapple block (1) against the first block (25) during its horizontal displacement, in such a way that the horizontal laminar blades (22) of the first block (25) are inserted into the slots (27) of the second block (26), and the cutting edge (28) cuts the pineapple block (1) into slices. The advantage provided by this realization is that in a single horizontal movement all the desired slices are obtained at the same time.

According to a particular configuration of the previous embodiment, the horizontal laminar blades (22) have a configuration such that they form a cutting edge (28) or vertical leading edge, which means that in the horizontal displacement of the second block (26) all the cuts of the slices to the pineapple block (1) are made at the same time. This is obtained with horizontal laminar blades (22) of the same length and aligned vertically.

Alternatively, the horizontal laminar blades (22) are configured such that they form a cutting edge (28) inclined with respect to the vertical, which means that in the horizontal displacement of the second block (26) all cuts of the slices to the pineapple block (1) are not made at the same time. If the inclination is such that the top of the cutting edge (28) is advanced in relation to the bottom of said cutting edge (28), the cuts of the top of the pineapple block (1) will be made first and finally those at the bottom thereof. On the contrary, if the inclination is such that the bottom of the cutting edge (28) is advanced in relation to the top of said cutting edge (28), the cuts of the bottom of the pineapple block (1) will be made first and finally those at the top thereof. This inclination can be achieved with horizontal laminar blades (22) of different lengths or arranged in such a way that their ends are not aligned vertically. The advantage of either of these two embodiments is that in addition to obtaining all the slices with a single horizontal movement, by first making some cuts and then others (depending on the advanced area of the cutting edge), a sequential multiple cut of the slice to slice is obtained that squeezes and crushes less the pineapple block (1), which means less abuse of the fiber and therefore less extraction of the pineapple juice during processing.

Alternatively, if the final processing and delivery mechanism (8) does not have any blade, it will deliver the pineapple block (1) in a single horizontal movement without dividing it into slices into the collection bucket, although it could be divided according to the pieces made previously by the inner radial blades (20) as appropriate.

## Claims

1. Pineapple peeling and cutting machine, comprising
- an access door (2) to the interior of the machine,
- a feeder, configured to convey the pineapples (1) to
- a crown and base cutting system (6),
- a peeling system (7) arranged downstream the crown and base cutting system (6),
- a final processing and delivery mechanism (8) arranged downstream the peeling system (7), and
- a control system configured to control the drive and movement of the crown and base cutting system (6), the peeling system (7) and the final processing and delivery mechanism (8),
**characterized in that** the crown and base cutting system (6) comprises
- movable gripping means (9), configured to hold and move the pineapples (1) in a linear cutting path to cut their crown and base, and lead them to the peeling system (7), in turn comprising
- a pneumatic gripper (11) comprising two arms (12) with parallel opening, and a "V" shaped claw (13) attached to the end of each arm (12), both claws (13) facing each other and configured to hold the pineapple (1) between them, and
- a pneumatic linear actuator (14) on which the pneumatic gripper (11) is fixed, configured to move it in the linear cutting path, and
- a crown cutting blade (10) and a base cutting blade (10') of the pineapple (1), both horizontal, arranged in the cutting path of the gripping means (9), adjustable in height, and separated from each other by a distance configured to allow the passage of the pneumatic gripper (11) between both blades (10, 10') in its linear cutting path.

2. Pineapple peeling and cutting machine, according to claim 1, wherein the pineapple feeder (1) comprises a first guiding hole (4) in the internal part of the door (2) and a second guiding hole (5) in the internal structure of the machine facing each other and configured to house each other and guide the pineapples (1) to the crown and base cutting system (6).

3. Pineapple peeling and cutting machine, according to any of the preceding claims, wherein the crown cutting blade (10) and the base cutting blade (10') are "V" shaped.

4. Pineapple peeling and cutting machine, according to any of the preceding claims, wherein the peeling system (7) comprises
- a cylindrical cutting tube (15) arranged vertically, configured to vertically hold the pineapple (1) transported by the movable gripping means (9), and peel its outer skin by means of pressure exerted by
- a vertical cylindrical pusher (16) configured to push the pineapple (1) along the cylindrical cutting tube (15),
said cylindrical cutting tube (15) being configured to house inside the pineapple block (1) stripped of its outer skin once it has been cut.

5. Pineapple peeling and cutting machine, according to claim 4, wherein the peeling system (7) comprises
- at least one inner tubular blade (18) arranged concentrically inside the cylindrical cutting tube (15), configured for cutting and removing the core of the pineapple (1) during peeling its outer skin, and
- at least one inner radial blade (20) arranged radially inside the cylindrical cutting tube (15) configured for radial slicing of the pineapple block (1) during peeling of its outer skin and for fixing the inner tubular blade (18) to the cylindrical cutting tube (15).

6. Pineapple peeling and cutting machine, according to any of claims 4 to 5, wherein the peeling system (7) comprises at least one external radial blade (19) arranged radially on the outside of the cylindrical cutting tube (15) configured for radial cutting of the outer skin during peeling.

7. Pineapple peeling and cutting machine, according to any of claims 4 to 6, wherein the peeling system (7) comprises deflectors (21) arranged on the outside of the bottom of the cylindrical cutting tube (15) configured to deflect the skin at the end of peeling.

8. Pineapple peeling and cutting machine, according to any of claims 4 to 6, wherein the end of the cylindrical pusher (16) copies the shape of the cylindrical cutting tube assembly (15) and is configured to enter inside it during peeling of the outer skin.

9. Pineapple peeling and cutting machine, according to any of the preceding claims, wherein the final processing and delivery mechanism (8) is moved perpendicular to the linear cutting path of the movable gripping means (9) and the peeled (7) and is configured to place the pineapple block (1) after peeling its outer skin in a collection bucket.

10. Pineapple peeling and cutting machine, according to claim 9, wherein the final processing and delivery mechanism (8) comprises a horizontal laminar blade (22) with reciprocating horizontal movement configured to cut the pineapple block (1) into slices and place them in the collection bucket.

11. Pineapple peeling and cutting machine, according to claim 9, wherein the pineapple final processing and delivery mechanism (8) comprises
- a first fixed block (25) comprising a plurality of horizontal laminar blades (22) stacked vertically and spaced apart, the free ends of which form a cutting edge (28), and
- a second horizontally movable block (26) comprising a plurality of slots spaced apart and aligned with the horizontal laminar blades (22) of the first block (25), configured to push the pineapple block (1) against the first block (25) and cut the pineapple block (1) into slices through the leading edge (28) by introducing the horizontal laminar blades (22) into the slots (27).

12. Pineapple peeling and cutting machine, according to claim 11, wherein the horizontal laminar blades (22) are arranged in the first block (25) forming a vertical cutting edge (28).

13. Pineapple peeling and cutting machine, according to claim 11, wherein the horizontal laminar blades (22) are arranged forming a cutting edge (28) inclined with respect to the vertical.

14. Pineapple peeling and cutting machine, according to any of the preceding claims, wherein the crown and base cutting system (6) comprises a pneumatic ejector cylinder (24) movable perpendicular to the linear cutting path of the gripping means (9) movable and the peeling system (7), and configured to expel the crown that has been placed on the crown cutting blade (10) upon cutting said crown.
